# EUROPEAN PATENT APPLICATION

(11) **EP 2 813 730 A1**
(43) Date of publication of application: **17.12.2014**
(21) Application number: 13172194.6
(22) Date of filing: 15.06.2013
(51) Int. Cl.: F16G 11/00, B63B 35/79

(54) **High load release device**

(71) Applicant: Theuma, Jason Phillip, Emerald, Victoria 3782 (AU)
(72) Inventor: Theuma, Jason Phillip, Emerald, Victoria 3782 (AU)
(74) Representative: McQueen, Andrew Peter

(57) **Abstract**

A high load release device includes a line having a first portion and a second portion, a rope having a rope loop, a first ring coupled to the line and a second ring coupled to the rope, the second ring coupled to the first ring and the rope loop coupled to the first ring. The high load release device also includes a curved pin coupled to the second portion of the line, the curved pin coupled to the second ring with the rope loop thereby coupling the line to the rope. The high load release device also includes a pair of release handles disposed on the second portion of the line and the second end of the rope, the pair of release handles when pulled releases the coupled curved pin from the rope loop thereby releasing the coupled rope from the line.

## Description

### BACKGROUND OF THE INVENTION

### FIELD OF THE INVENTION:

The present invention is a load release device. More specifically, the present invention is a high load release device.

### DESCRIPTION OF THE RELATED ART:

Often when boating or other activity that requires attaching two or more lines a high load release device is required. The high load release device often times however may not be safe and not provide a quick emergency release if required.

The present invention is a high load release device. The high load release device provides a safe and quick emergency release if required.

### BRIEF SUMMARY OF THE INVENTION

The present invention is a load release device. More specifically, the present invention is a high load release device.

The high load release device includes a line having a first portion with a first end and a second portion with a first end and a second end, a rope having a first end, a second end and a rope loop, a first ring coupled to the first end of the first portion of the line and a second ring coupled to the first end of the rope, the first ring being larger than the second ring, the second ring coupled to the first ring and the rope loop coupled to the first ring. The high load release device also includes a curved pin coupled to the first end of the second portion of the line, the curved pin coupled to the second ring with the rope loop thereby coupling the line to the rope, a pair of release handles disposed on the second end of the second portion of the line and the second end of the rope, the pair of release handles when pulled releases the coupled curved pin from the rope loop allowing the rope loop and second ring to be pulled through the first ring thereby releasing the coupled rope from the line and a cover coupled to the device to cover the device.

It is an object of the present invention to provide a high load release device that allows two objects that are connected to each other to be released when under a high load and also when no load is applied.

It is an object of the present invention to provide a high load release device that offers a substantial mechanical advantage where it takes relatively little effort to separate the high load release device even when under extreme loads while also allowing the high load release device to be encased in a cover to prevent parts and other objects from getting caught within the high load release device.

It is an object of the present invention to provide a high load release device that utilizes a two ring system in combination with a curved pin and cover set-up in contrast to a three ring system with different rigging and without a curved pin or cover.

It is an object of the present invention to provide a high load release device that accommodates an emergency situation or a non-emergency situation.

### BRIEF DESCRIPTION OF THE DRAWINGS

The present invention will be described by way of exemplary embodiments, but not limitations, illustrated in the accompanying drawings in which like references denote similar elements, and in which:
FIG. 1 illustrates an overhead environmental view of a high load release device, in accordance with one embodiment of the present invention.
FIG. 2 illustrates an exploded side view of a high load release device, in accordance with one embodiment of the present invention.
FIG. 3 illustrates a side view of a cover, in accordance with one embodiment of the present invention.
FIG. 4 illustrates a side view of a high load release device in an uncoupled position, in accordance with one embodiment of the present invention.
FIG. 5 illustrates an overhead view of a coupled high load release device in a coupled position, in accordance with one embodiment of the present invention.
FIG. 6 illustrates a cross-sectional side view along line 3-3 of a high load release device, in accordance with one embodiment of the present invention.
FIG. 7 illustrates an overhead view of a high load release device without a cover, in accordance with one embodiment of the present invention.

### DETAILED DESCRIPTION OF ILLUSTRATIVE EMBODIMENTS

Various aspects of the illustrative embodiments will be described using terms commonly employed by those skilled in the art to convey the substance of their work to others skilled in the art. However, it will be apparent to those skilled in the art that the present invention may be practiced with only some of the described aspects. For purposes of explanation, specific numbers, materials and configurations are set forth in order to provide a thorough understanding of the illustrative embodiments. However, it will be apparent to one skilled in the art that the present invention may be practiced without the specific details. In other instances, well-known features are omitted or simplified in order not to obscure the illustrative embodiments.

Various operations will be described as multiple discrete operations, in turn, in a manner that is most helpful in understanding the present invention however the order of description should not be construed as to imply that these operations are necessarily order dependent. In particular, these operations need not be performed in the order of presentation.

The phrase "in one embodiment" is used repeatedly. The phrase generally does not refer to the same embodiment, however, it may. The terms "comprising", "having" and "including" are synonymous, unless the context dictates otherwise.

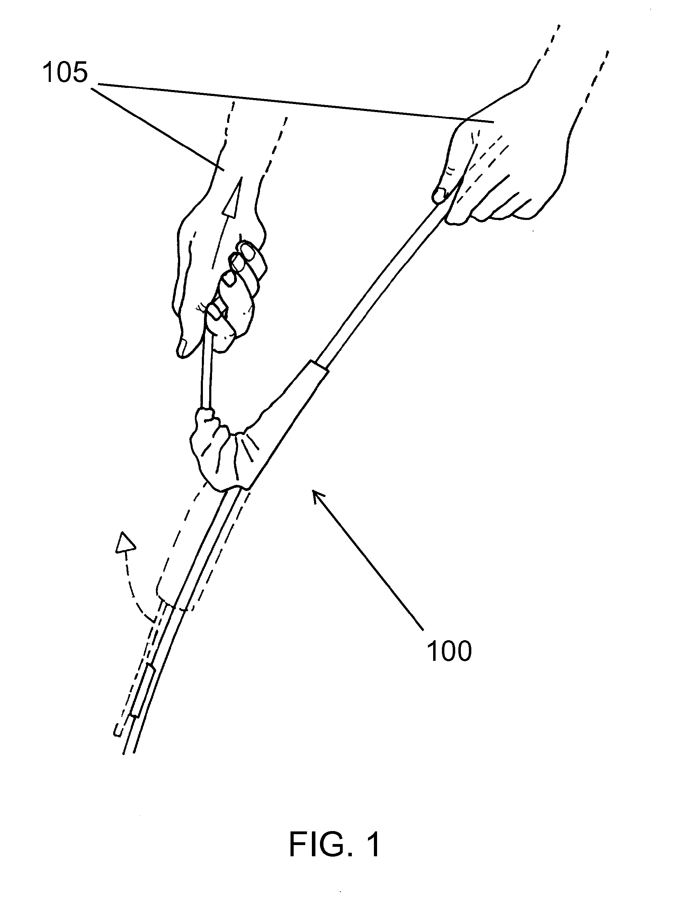

FIG. 1 illustrates an overhead environmental view of a high load release device 100, in accordance with one embodiment of the present invention.

The high load release device 100 is grasped by a user 105 to pull the high load release device 100 to release the high load release device 100 that can be attached to a plurality of coupled objects (not shown).

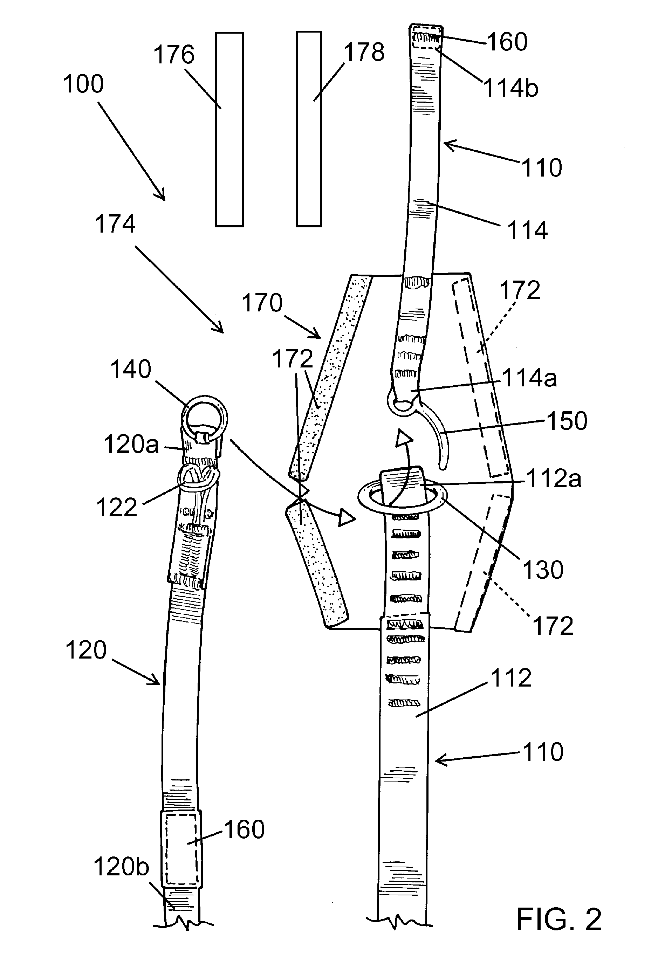

FIG. 2 illustrates an exploded side view of a high load release device 100, in accordance with one embodiment of the present invention.

The high load release device 100 includes a line 110, a rope 120, a first ring 130, a second ring 140, a curved pin 150, a pair of release handles 160 and a cover 170. The line 110 can have a first portion 112 with a first end 112a and a second portion 114 with a first end 114a and a second end 114b. The line 110 can be made of nylon, strong fiber or DYNEEMA®, rope or other suitable material to sustain any heavy loads. The rope 120 can have a first end 120a, a second end 120b and a rope loop 122. The rope 120 can be made of nylon, strong fiber or DYNEEMA®, rope or other suitable material to sustain any heavy loads. The first ring 130 can be coupled to the first end 112a of the first portion 112 of the line 110. The first ring 130 can be made of stainless steel or other suitable material to sustain any heavy loads. The second ring 140 can be coupled to the first end 120a of the rope 120, the first ring 130 being larger than the second ring 140, the second ring 140 can be coupled to the first ring 130 and the rope loop 122 can be coupled to the first ring 130. The second ring 140 can also be coupled to the first end 120a of the rope 120, the second ring 140 can also be double-backed through the first ring 130 and the rope loop 122 can also be double-backed through the first ring 130. The second ring 140 can be made of stainless steel or other suitable material to sustain any heavy loads. The curved pin 150 can be coupled to the first end 114a of the second portion 114 of the line 110. The curved pin 150 can be coupled to the second ring 140 with the rope loop 122, thereby coupling the line 110 to the rope 120. The curved pin 150 can be made of stainless steel or other suitable material to sustain any heavy loads. The pair of release handles 160 can be disposed on the second end 114b of the second portion 114 of the line 110 and the second end 120b of the rope 120. The pair of release handles 160 when pulled releases the coupled curved pin 150 from the rope loop 122 allowing the rope loop 122 and the second ring 140 to be pulled through the first ring 130 thereby releasing the coupled rope 120 from the line 110. The cover 170 can be coupled to the high load release device 100 to cover the high load release device 100. The cover 170 can be coupled to the high load release device 100 with one or more hook and loop or VELCRO® fasteners 172. The high load release device 100 can be utilized under a high load and utilized under no load conditions. The high load release device 100 can be a quick release device 174 and can be utilized in combination with one or more yachting lanyards 176. The high load release device 100 can be a safety line 178 grasped by a user 105. The high load release device 100 can be utilized in a non-emergency situation and in an emergency situation.

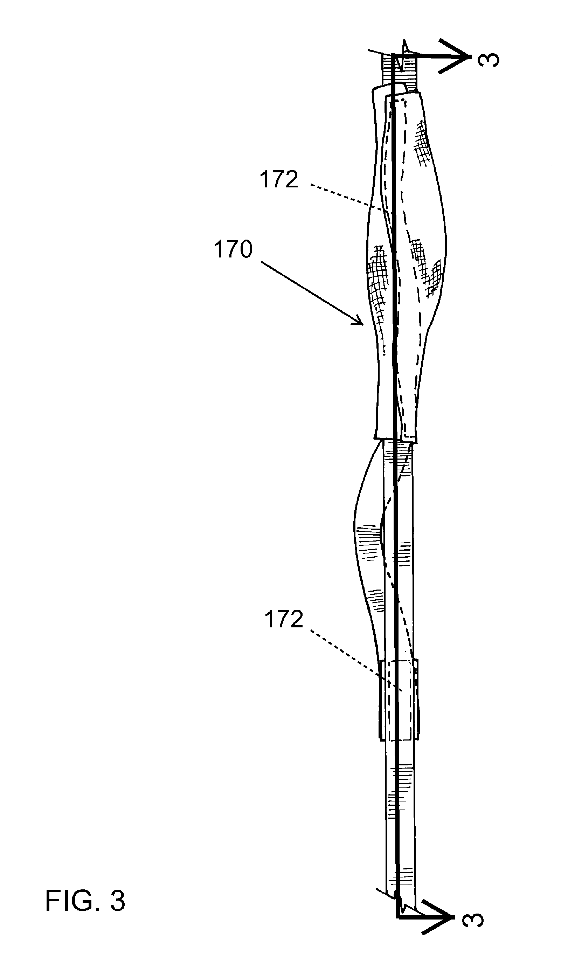

FIG. 3 illustrates a side view of a cover 170, in accordance with one embodiment of the present invention.

The cover 170 illustrated in FIG. 3 is coupled in a coupled position. The cover 170 can be coupled to the high load release device 100 with the one or more hook and loop fasteners 172 or other suitable fasteners.

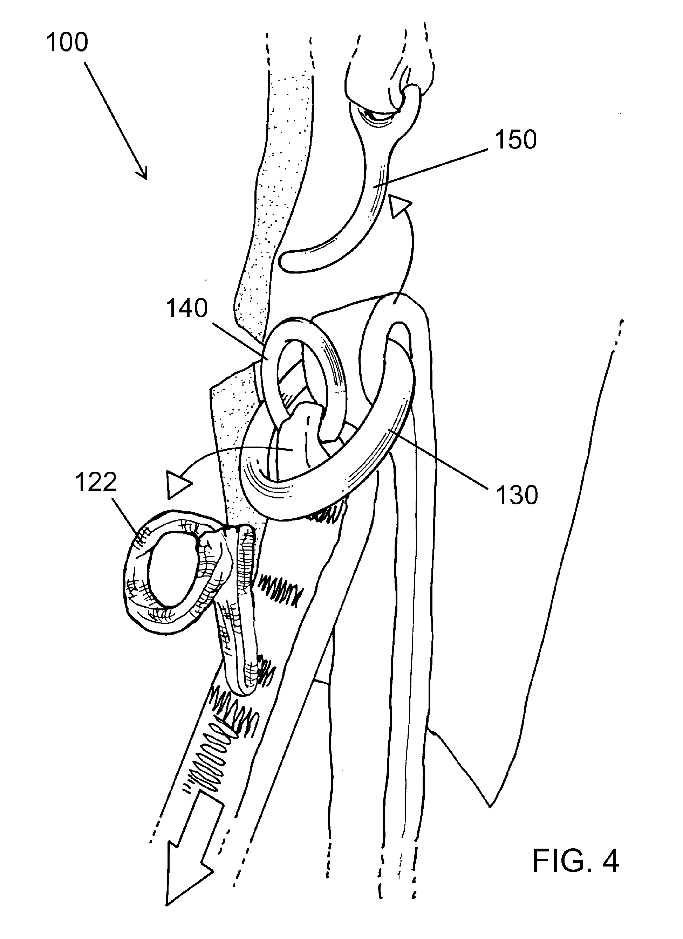

FIG. 4 illustrates a side view of a high load release device 100 in an uncoupled position, in accordance with one embodiment of the present invention.

The high load release device 100 illustrated in FIG. 4 is in an uncoupled position. The second ring 140 also illustrated in FIG. 4 is inserted through the first ring 130 and the rope loop 122 is uncoupled to the second ring 140. The curved pin 150 also illustrated in FIG. 4 is uncoupled to the rope loop 122.

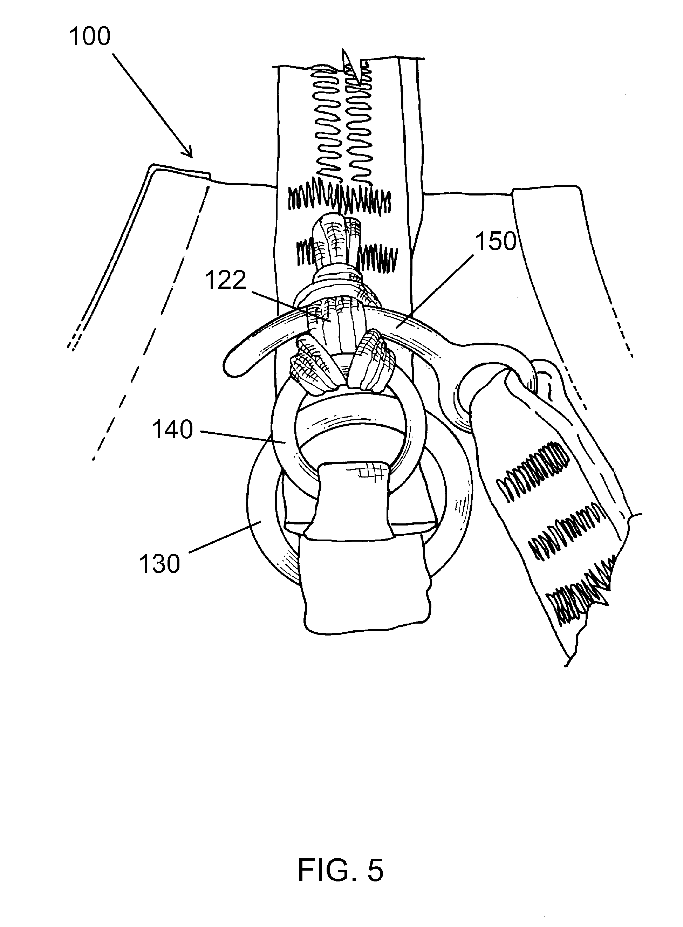

FIG. 5 illustrates an overhead view of a coupled high load release device 100 in a coupled position, in accordance with one embodiment of the present invention.

The high load release device 100 illustrated in FIG. 5 is in a coupled position. The second ring 140 also illustrated in FIG. 5 is inserted through the first ring 130 and the rope loop 122 is coupled to the first ring 130. The curved pin 150 also illustrated in FIG. 5 is coupled to the rope loop 122.

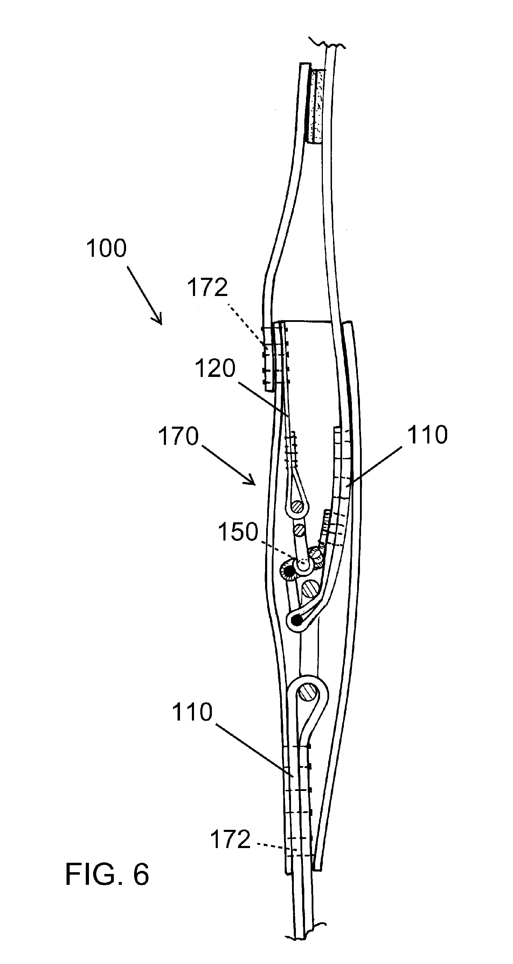

FIG. 6 illustrates a cross-sectional side view along line 3-3 of a high load release device 100, in accordance with one embodiment of the present invention.

The high load release device 100 illustrated in FIG. 6 is in a coupled position where the line 110 and the rope 120 are coupled together. The high load release device 100 illustrated in FIG. 6 includes a cover 170 coupled to the curved pin 150 with the one or more hook and loop fasteners 172 to cover the high load release device 100.

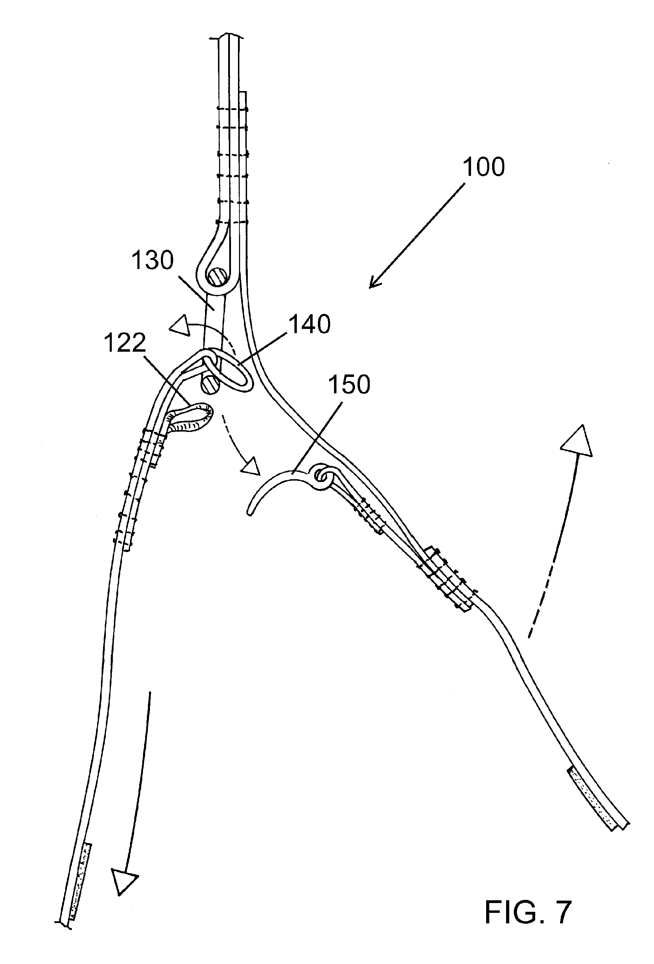

FIG. 7 illustrates an overhead view of a high load release device 100 without a cover 170, in accordance with one embodiment of the present invention.

The high load release device 100 illustrated in FIG. 7 is in an uncoupled position. The second ring 140 also illustrated in FIG. 7 is inserted through the first ring 130 and the rope loop 122 is uncoupled to the second ring 140. The curved pin 150 also illustrated in FIG. 7 is uncoupled to the rope loop 122.

The high load release device can be placed into a line such as a safety line connecting a sailor to a yacht. If in an emergency or non-emergency situation a user desired to release himself from the yacht the user would simply pull one of a pair of release handles which are coupled to the high load release device. This in turn pulls a curved pin out from the rope loop allowing the rope loop to be pulled through the small ring. This allows the small ring to pass through the larger ring and separates the two components of the high load release device releasing the two attached objects from each other. The high load release device can be used in yachting lanyards or any other device where a safe and quick release device is required.

The high load release device can be designed to allow the user to be able to detach from what they are connected to both under high load or no load conditions. The high load release device can be designed primarily for use in marine safety tethers and lanyards but is also suitable for any other tether and lanyard application. The high load release device can hold the same load as an ordinary lanyard, tether or harness but due to the mechanical advantage offered by the multiple rings of the high load release device will allow the user to be released with minimal effort when the lanyard is fully-loaded or when under no load.

The high load release device works by using a series of two rings, although the high load release device can be made using any number of rings in the range of approximately one to thirty rings. The high load release device can be made with one ring extending through as many rings as required and the rings can be constructed of any material suitable of carrying the required loads. This includes but is not confined to webbing loops, rope loops, rubber loops, composite rings etc. A large ring and small ring can be primarily made of metal however materials including but not limited to composite materials, rope, and webbing can also be suitable. The large ring can be connected to one side of the lanyard or tether while the small ring can be connected to a separate piece of lanyard or tether. The lanyard or tether materials can be primarily webbing of any kind including a strong fiber material or DYNEEMA® or nylon, but can also be made of any material capable of taking the load required including rope.

The small ring can be fed through the hole of the large ring and doubled back on itself. The rope loop can then be fed through the small ring and double back on itself. Once the rings have been assembled in their correct order the curved pin is weaved through the rope loop to lock off the high load release device. The curved pin can be attached to the release cover. The curved pin can be primarily made of steel but can be made of any material suitable to take the intended load including but not limited to plastic cord and any other material that can be inserted through the final loop to ensure the high load release device does not come undone at the required load. The curved pin can also be straight or replaced completely with a wire or piece of round plastic and need not be attached to the cover.

Once the curved pin can be inserted, the cover folds around the entire high load release device and is fastened together using one or more hook and loop fasteners, although the cover can also be closed using a plurality of tucking tabs or other suitable fasteners. The line can be a lanyard or other suitable line and can be separated into two parts when the cover can be pulled away from the lanyard or tether. The one or more hook and loop fasteners separate and the curved pin can be released from the rope loop. This allows the rope loop to be pulled through the small ring and the small ring to be pulled through the large ring allowing the two parts of the lanyard or tether to separate making a break in the lanyard and releasing the user or object from the attachment point.

The cover can be sewed into the large loop section of the lanyard and serves two purposes, to act as the release handle to pull the curved pin out of the rope loop and to cover the high load release device once the high load release device is locked to avoid accidental release, although the cover is not vital to the design and can also be replaced with remote handles or direct pull devices. The curved pin is connected to a fabric cover rapped around the entire high load release device. When the cover is pulled from the pull tab, the one or more hook and loop fasteners separate and the curved pin can be pulled out of the rope loop allowing the high load release device to open-up and separate making a break in the lanyard and releasing the user or object from the attachment point. In this case the curved pin can be attached to a rip pocket however this can also be achieved by having a pair of remote handle VELCRO®, flexible chord or any other mechanism suitable of taking the load.

While the present invention has been related in terms of the foregoing embodiments, those skilled in the art will recognize that the invention is not limited to the embodiments described. The present invention can be practiced with modification and alteration within the scope of the appended claims. Thus, the description is to be regarded as illustrative instead of restrictive on the present invention.

## Claims

1. A high load release device, comprising:
a line having a first portion with a first end and a second portion with a first end and a second end;
a rope having a first end, a second end and a rope loop;
a first ring coupled to the first end of the first portion of the line;
a second ring coupled to the first end of the rope, the first ring being larger than the second ring, the second ring coupled to the first ring with the rope loop and the rope loop coupled to the first ring;
a curved pin coupled to the first end of the second portion of the line, the curved pin coupled to the second ring with the rope loop thereby coupling the line to the rope;
a pair of release handles disposed on the second end of the second portion of the line and the second end of the rope, the pair of release handles when pulled releases the coupled curved pin from the rope loop allowing the rope loop and the second ring to be pulled through the first ring thereby releasing the coupled rope from the line; and
a cover coupled to the high load release device to cover the high load release device.

2. The high load release device according to claim 1, wherein the first ring, the second ring and the curved pin are made of stainless steel.

3. The high load release device according to claim 1, wherein the cover is coupled to the high load release device with one or more hook and loop fasteners.

4. A high load release device, comprising:
a line having a first portion with a first end and a second portion with a first end and a second end;
a rope having a first end, a second end and a rope loop, the rope loop is disposed adjacent to the first end of the rope;
a first ring coupled to the first end of the first portion of the line;
a second ring coupled to the first end of the rope, the first ring being larger than the second ring, the second ring double-backed through the first ring and the rope loop double-backed through the first ring;
a curved pin coupled to the first end of the second portion of the line with the rope loop thereby coupling the line to the rope;
a pair of release handles disposed on the second end of the second portion of the line and the second end of the rope, the pair of release handles when pulled releases the coupled curved pin from the rope loop allowing the rope loop and the second ring to be pulled through the first ring thereby releasing the coupled rope from the line; and
a cover coupled to the curved pin with one or more hook and loop fasteners to cover the high load release device.

5. The high load release device according to claim 4, wherein the first ring and the second ring are made of stainless steel.

6. The high load release device according to claim 4, wherein the line and the rope are made of material selected from the group consisting of nylon, strong fiber or rope.

7. The high load release device according to claim 1 or claim 4, wherein the high load release device is utilized under a high load.

8. The high load release device according to claim 1 or claim 4, wherein the high load release device is utilized under no load.

9. The high load release device according to claim 1 or claim 4, wherein the high load release device is a quick release device.

10. The high load release device according to claim 1 or claim 4, wherein the high load release device is utilized in combination with one or more yachting lanyards.

11. The high load release device according to claim 1 or claim 4, wherein the line is a safety line grasped by a user.

12. The high load release device according to claim 1 or claim 4, wherein the high load release device is utilized in a non-emergency situation.

13. The high load release device according to claim 1 or claim 4, wherein the high load release device is utilized in an emergency situation.
